(19) Europäisches Patentamt / European Patent Office / Office européen des brevets

(11) **EP 2 138 960 A1**

(12) **EUROPEAN PATENT APPLICATION**

(43) Date of publication:
  **30.12.2009 Bulletin 2009/53**

(51) Int Cl.:
  **G06K 15/02** (2006.01)  **H04N 1/60** (2006.01)

(21) Application number: **08159264.4**

(22) Date of filing: **27.06.2008**

(84) Designated Contracting States:
  **AT BE BG CH CY CZ DE DK EE ES FI FR GB GR HR HU IE IS IT LI LT LU LV MC MT NL NO PL PT RO SE SI SK TR**
  Designated Extension States:
  **AL BA MK RS**

(71) Applicant: **Anoto AB**
  **227 22 Lund (SE)**

(72) Inventor: **Díaz López, José**
  **226 54, Lund (SE)**

(74) Representative: **Grönlund, Tim Linus Wilhelm**
  **Anoto AB**
  **Box 4106**
  **227 22 Lund (SE)**

(54) **A method and a device for controlling printing of graphical information**

(57)  A method for controlling printing of graphical information in combination with a coding pattern, wherein the graphical information and the coding pattern are to be printed with separate inks, the coding pattern being printed using a black ink corresponding to a K component of a CMYK colour space and the graphical information being printed using colour inks corresponding to CMY components of the CMYK colour space, comprises: receiving a representation of the graphical information comprising a set of elements making up the graphical information, each element comprising several component values together representing the colour of the element; and transforming the representation of the graphical information, said transformation mapping the component values of each element onto a range of values which is outside a domain where said black ink will be mixed by a printer into said colour inks during printing of the graphical information.

Fig 2

**Description**

<u>Field of the Invention</u>

The invention relates generally to printing of graphical information in combination with a coding pattern and, in particular to a method and a device for controlling the colours used by a printer in printing the graphical information.

<u>Background Art</u>

It is known to use a coding pattern to embed some type of information in a passive base such as a sheet of paper, a writing board or equivalent. A pattern-reading device, such as a suitably programmed scanner, fax machine, camera or electronic pen can then read, recreate and use the information embedded locally in the base. For example, graphical information on a base can be supplemented with embedded information which extends the functionality of the base. Such embedded information can comprise file data for full or partial recreation of the graphical information, commands, supplementary text or images, hyperlinks, absolute positions, etc. Also, the coding pattern may provide a position code for recording the sequential positions of an electronic pen, when used for writing on the base. Thus, the writing made with the electronic pen may also be digitally captured, which allows for further processing of the writing, such as displaying the writings on a monitor or transmitting the writing over a computer network.

Coding patterns are generally constructed around some form of machine-readable code symbols which are regularly spaced on the base. Examples of such coding patterns are given in US 5,221,833; US 5,477,012; WO 00/73983; WO 01/26032; WO 01/71643; and US 6,330,976.

In many cases, bases with a coding pattern can be generated on a large scale and with high precision in the graphics industry. There are, however, also occasions when it is desirable to create bases with a coding pattern on a small scale. This can then be carried out using a personal computer, to which a computer printer of, for example, the ink-jet or laser type, has been connected.

As stated above, both graphical information and a coding pattern may be printed on a base. It is then important that the graphical information does not interfere with the coding pattern so that the pattern-reading device is able to correctly decode the coding pattern. One way of ensuring that the graphical information does not interfere with the coding pattern is to use an ink that absorbs infrared light for printing the coding pattern. The pattern-reading device may then comprise an infrared light source for illuminating the coding pattern and bring out the coding pattern in images of the base captured by the pattern-reading device.

When printing a document, whether made in large scale by a printing press or in small scale by a computer printer, typically four different inks are used. A colour may be defined using the CMYK colour space, named after its four components, where C is cyan, M is magenta, Y is yellow and K is black. Each component value specifies the amount of the respective ink to be used for obtaining the colour. The colour inks corresponding to the CMY components are used to create different colours on the base by combining appropriate amounts of each ink to absorb the corresponding wavelengths on the base. Thus, adding large and equal amounts of all the colour inks corresponding to the CMY components would in theory form black on the base. However, due to imperfections in ink, the combination of large amounts of all the colour inks corresponding to the CMY components produces a muddy brown. Therefore, a fourth, black ink, represented by the K component in the CMYK colour space, is used for forming black on the base.

The black ink is carbon-based and also absorbs infrared light. In WO 01/48591, it is suggested that the ordinary black carbon-based printing ink is used for printing the coding pattern, which may then be clearly seen under infrared illumination. Since the colour inks do not absorb infrared light, they will not interfere with the coding pattern if the coding pattern is viewed under infrared illumination. Thus, the colour inks may be used for printing graphical information to be superimposed on the coding pattern.

It is important that the black ink is not used in the printing of the graphical information, since it may cause interference with the coding pattern. This may be accomplished by forcing the K component to zero in the CMYK representation of the colours of the graphical information. Then, the printing of the graphical information may be performed using only the colour inks. Thus, the colour inks need be used to a greater extent in printing of the graphical information.

However, the graphical information may not always be represented in the CMYK colour space. An image is often represented in the RGB colour space, using the components Red, Green and Blue. The RGB colour space is typically used by a computer monitor to determine the wavelengths of light to be emitted in order to form a colour. This is contrary to the CMYK colour space, where the wavelengths of light to be absorbed are determined instead. Thus, when an image that is represented in the RGB colour space is to be printed, the image needs to be converted to the CMYK colour space before it may be printed.

In conversion from the RGB colour space to the CMYK colour space, the exact distribution of the amounts of the different inks corresponding to the CMYK components that will be used may not be precisely predicted. It may be dependent on the type of printer that is to be used for performing the printing. For example, most printers try to mix some of the black ink corresponding to the K component into the colours in order to save ink, even when black is not to be printed. The K component corresponds to equal amounts of the CMY components, so it may for each colour to be printed at most replace an amount corresponding to the minimum value of the C, M, and Y components, without distorting the output colour.

As described above, in printing graphical information to be combined with a coding pattern it may be desired that the K component is never used. Thus, measures should be taken to ensure that the K component is not used. The possibilities to control the K component may depend on at which stage of the printing process the control may be applied. For example, in offset printing, there are great possibilities to exactly control how the inks are to be used, and the graphical information may be printed while disabling use of the ink corresponding to the K component. On the other hand, a computer printer may have internal control instructions to mix in the black ink corresponding to the K component, whenever possible in order to save ink. In this situation, it may difficult to completely avoid the use of the black ink in printing graphical information. Even if the image to be printed is presented to the printer with the K component being set to zero, the printer itself may introduce the black ink corresponding to the K component during printing.

Thus, for certain situations, there is a need to manipulate graphical information to be printed in combination with a coding pattern in order to avoid the black ink corresponding to the K component to be used. This would allow the coding pattern to be printed with the black ink and to appear clearly under infrared illumination, since the graphical information would not interfere with the coding pattern. This need is especially apparent for any printer interfaces that are based on an RGB representation of images, such as GDI (Graphics Device Interface) printers.

Summary of the Invention

It is an object of the invention to enable graphical information to be generally printed with a coding pattern, wherein the coding pattern is printed using a black ink corresponding to the K component and the graphical information is printed using only the colour inks corresponding to the CMY components. It is a specific object of the invention to provide manipulation of the graphical information in order to prevent the black ink corresponding to the K component to be used in printing the graphical information.

One way to ensure that the black ink is never used would be to set one of the RGB components in each picture element of the graphical information to maximum. Preferably, the RGB component that is closest to maximum is used in each picture element, since this would apply minimum distortion to the graphical information. This would imply that one of the CMY components would always be zero, since the CMY components are typically given as 1-(the corresponding RGB component). Thus, the K component could never be used during printing, since the K component at most may equal the smallest value of the CMY components, otherwise the colour would be affected. However, using this approach, one of the colours is completely eliminated in each picture element of the graphical information. This destroys texture of images in the graphical information and the images may be heavily distorted.

According to the invention, it has been found that the graphical information may be manipulated much less heavily, while still ensuring that the black ink corresponding to the K component is not used in printing the graphical information. This is achieved by means of a method according to claim 1, a computer program product according to claim 6, and a device according to claim 7.

Thus, according to a first aspect of the invention, it relates to a method for controlling printing of graphical information in combination with a coding pattern, wherein the graphical information and the coding pattern are to be printed with separate inks, the coding pattern being printed using a black ink corresponding to a K component of a CMYK colour space and the graphical information being printed using colour inks corresponding to CMY components of the CMYK colour space, wherein the method comprises: receiving a representation of the graphical information comprising a set of elements making up the graphical information, each element comprising several component values together representing the colour of the element; and transforming the representation of the graphical information, said transformation mapping the component values of each element onto a range of values which is outside a domain where said black ink will be mixed by a printer into said colour inks during printing of the graphical information.

According to a second aspect of the invention, it relates to a computer program product, directly loadable into the internal memory of a processor in a computer unit, comprising software instructions that, when executed in said processor, perform the method according to the first aspect of the invention.

According to a third aspect of the invention, it relates to a device for controlling printing of graphical information in combination with a coding pattern, wherein the graphical information and the coding pattern are to be printed with separate inks, the coding pattern being printed using a black ink corresponding to a K component of a CMYK colour space and the graphical information being printed using colour inks corresponding to CMY components of the CMYK colour space, wherein the device is arranged to receive a representation of the graphical information comprising a set of elements making up the graphical information, each element comprising several component values together representing the colour of the element; and wherein the device comprises a transformation unit, which is arranged to transform the representation of the graphical information, said transformation mapping the component values of each element onto a range of values which is outside a domain where said black ink will be mixed by a printer into said colour inks during printing of the graphical information.

Thanks to the invention, the graphical information is manipulated in order to prevent the black ink corresponding to the K component to be used when printing the graphical information, while the appearance of the graphical information may still be satisfactory. According to the invention, the representation of the graphical information is transformed in order to map the component values onto a range of values. This displaces colours used in the graphical information onto brighter colours. However, the texture and content of images in the graphical information may be essentially maintained.

According to an embodiment, the invention uses the insight that there is not a need for completely forcing one of the CMY components to zero in order to prevent the K component to be used. Instead, it is acknowledged that a printer will not start mixing the black ink into the colour inks until the smallest value of the CMY components exceeds a mixing threshold value. Thus, the component values are mapped onto a range of values such that at least one of the component values never exceeds the mixing threshold value.

Brief Description of the Drawings

The embodiments of the invention will now be described in more detail with reference to the accompanying schematic drawings.

Fig 1 is a schematic view of an electronic pen and a base provided with a coding pattern and graphical information.

Fig. 2 is a schematic view of a system for designing and printing a coding pattern and graphical information onto a base.

Fig 3 is a flow chart of a method for printing graphical information.

Detailed Description of Preferred Embodiments

A coding pattern may embed some type of information in a passive base such as a sheet of paper, a writing board or equivalent. The coding pattern may be read by an appropriate reading device for capturing the information coded by the coding pattern. The information may then be processed in a suitable manner.

The coding pattern may be a position-coding pattern coding positions on a surface of the base. The reading device may thus record positions on the surface. The reading device may be implemented as an electronic pen, which includes a writing implement, whereby the electronic pen may record a sequence of positions of a writing tip as the reading device is used for writing on the surface. Thus, a digital copy of the writing made with the electronic pen may be captured. The coded positions may also be associated with specific functions and/or commands such that a recording of the positions with the electronic pen may trigger an action. Examples of such position-coding patterns are given in US 5,477,012; WO 00/73983; WO 01/26032; WO 01/71643; and US 6,330,976.

The coding pattern may alternatively code bit information. The reading device may then read the information by being drawn across the coding pattern in a predetermined manner. Thus, information may be captured by the reading device for processing or transmitting the information to an external unit. An example of such a coding pattern is given in US 5,221,833.

The reading device may comprise an image sensor, which is able to record images of the coding pattern. The reading device may further comprise a processor for decoding the coding pattern. Alternatively, the recorded images may be transferred from the reading device to an external unit, wherein the images are processed. The reading device may suitably be portable and hand-held, such that a user may direct the reading device towards the coding pattern for reading the information coded by the coding pattern. However, the reading device may also be stationary, and the base which is provided with the coding pattern may be presented to the reading device. The reading device may for example be implemented as a suitably programmed scanner, fax machine, camera or electronic pen

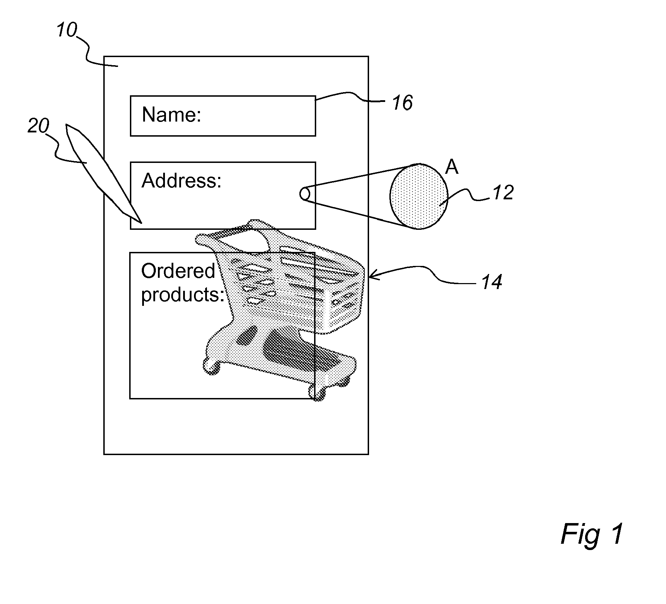

Fig. 1 shows an embodiment of a base 10 provided with a coding pattern 12 and a reading device in the form of an electronic pen 20 for reading the coding pattern 12. The coding pattern 12 may cover the entire surface of the base. However, in Fig. 1, only an enlarged portion A of the base 10 is shown to illustrate the coding pattern 12.

The base 10 is also provided with graphical information 14. The graphical information 14 may provide instructions to a user of the electronic pen 20 how the different portions of the coding pattern 12 may be interpreted. For example, as shown in Fig. 1, the base 10 may constitute a form that is to be filled in by the user.

The processing of recorded positions coded by the coding pattern 12 may be arranged to treat input from different areas of the form as e.g. a customer name, address, or ordered products. Thus, rules for how the positions of the coding pattern 12 should be processed are set up. The graphical information 14 may then indicate fields 16 corresponding to the areas defined by the processing rules, such that the user is guided to enter the relevant information using the electronic pen 20 in these fields 16.

The graphical information 14 may also indicate areas of the coding pattern 12 that are associated with a specific function. For example, the electronic pen 20 may be triggered to transmit recorded information to an external unit (not shown) upon reading a specific position coded by the coding pattern 12. Other examples of triggered actions may be the electronic pen 20 providing feedback to the user through a display or an audio speaker. The graphical information 14 may indicate both the area that is associated with the specific function and what the function is. Hence, the graphical information 14 provides guidance to the user of the rules for processing the coding pattern 12.

The graphical information 14 may also be aesthetically pleasing to a user of the base 10.
For example, the graphical information 14 may include a background image to a form. Moreover, the graphical information 14 may provide additional information, which may not be related to the rules for processing the coding pattern 12. For example, the graphical information 14 may provide information of where and when the coding pattern 12 was printed in order to provide traceability should there be any problems with the reading of the coding pattern 12.

Whereas the graphical information 14 helps a user to enter or read information correctly from a base 10 provided with a coding pattern 12, the graphical information should not interfere with the reading of the coding pattern 12 by the reading device. The coding pattern 12 and the graphical information 14 should therefore be arranged on the base 10 in such a manner that the reading device may image the coding pattern 12 separately from the graphical information 14.

The properties of inks may be used for avoiding interference of the graphical information 14 with the coding pattern 12. In industrial or commercial printing as well as in colour printing using a computer printer, four different inks are commonly used: a black ink and three different colour inks, cyan, magenta, and yellow. The black ink absorbs infrared light, whereas the colour inks do not absorb infrared light to any substantial extent. This feature may be used for ensuring that the graphical information 14 does not interfere with the coding pattern 12.

The coding pattern 12 is printed using the black ink and the graphical information 14 is printed using only the colour inks. The reading device may then illuminate the coding pattern 12 by means of an infrared light source. Further, the reading device may comprise an infrared wavelength filter, such that only infrared light reaches an image sensor of the reading device. This implies that the coding pattern 12 will be clearly seen as a dark pattern on a light background in images of the base 10 recorded by the reading device.

The printing of the coding pattern 12 and the graphical information 14 may be performed in separate steps. For example, the printing of the coding pattern 12 may be performed centrally in a printing press and papers provided with coding pattern 12 may be distributed to different users. These users may then design and print the graphical information 14 onto the papers locally using, for instance, a computer printer of the ink-jet or laser type. Of course, the graphical information 14 may alternatively be printed first and the coding pattern 12 may be added in a later step. As a further alternative, the graphical information 14 and the coding pattern 12 may be printed simultaneously.

The CMYK colour space may be used to represent the amounts of the different inks to be used during printing in order to print the graphical information 14 onto the base 10. A CMYK representation of a picture element in the graphical information 14 comprises four different component values corresponding to the amount of the respective ink to be used in forming the picture element. Thus, there is a set of each of the component values for representing all of the picture elements of the graphical information 14. The K component of the CMYK colour space represents the amount of black ink to be used, whereas the CMY components represents the amount of Cyan, Magenta and Yellow ink to be used, respectively.

As the black ink corresponding to the K component in the CMYK representation is not to be used in printing the graphical information 14, the K component may be set to zero. However, a printer may add the black ink during printing anyway, using automated algorithms for replacing the colour inks with the black ink in order to save ink. Therefore, there is a need to ensure that the computer printer does not mix black ink into the colour inks when printing the graphical representation. Meanwhile, the colour content of the graphical information 14 should be maintained as unaffected as possible.

The black ink is neutral in colour and corresponds to equal amounts of each of the colour inks. Thus, in a process called undercolour removal, the K component value may be increased to replace an equal amount of the CMY component values. However, undercolour removal is not performed unless the smallest value of the CMY component values exceeds a mixing threshold value. This mixing threshold value may typically be as large as 75% of the maximum component value.

It has been realized that avoiding that the graphical information 14 is printed using the black ink may be achieved by ensuring that at least one of the CMY component values never exceeds the mixing threshold value. This may be accomplished by performing a transformation of a representation of the graphical information 14 in order to map the colour content of the representation onto a domain where at least one of the CMY component values never exceeds the mixing threshold value. A system may be set up such that any representation of the graphical information 14 may be transformed, regardless whether the representation comprises any values that exceed the mixing threshold value. Alternatively, the representation of the graphical information 14 is first examined whether it would be printed using any black ink. If so, the representation of the graphical information 14 will be transformed, otherwise it will not be altered.

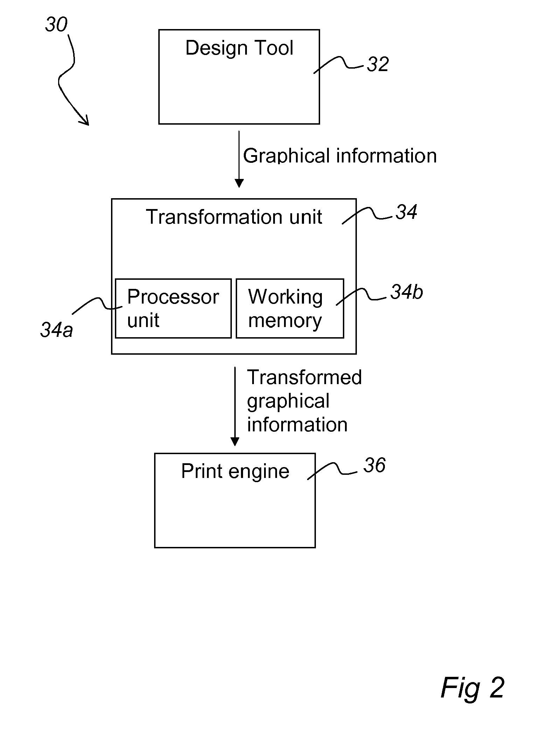

Referring now to Fig. 2, a system 30 for designing and printing graphical information will be described. The system 30 comprises a design tool 32, which may be implemented as designing software running on a general-purpose computer. The design tool 32 may be used to design the layout of the graphical information 14. The system 30 further comprises a transformation unit 34 which is arranged to receive a representation of the graphical information 14 from the design tool 32 and to transform the representation of the graphical information 14 in order to map the colour content of the representation onto a domain where at least one of the CMY component values never exceeds the mixing threshold value, as will be further described below. The system 30 also comprises a print engine 36, which is arranged to receive the transformed representation of the graphical information 14 and generate a hardcopy of the graphical information 14.

According to one embodiment, the transformation unit 34 may comprise a processor unit 34a, which is arranged to perform the transformation. The transformation unit 34 may also comprise a working memory 34b, in which the representation of the graphical information may be stored before and after the transformation. The working memory 34b may be integrated in the processor unit 34a or connected to the processor unit 34a. The transformation unit 34 may comprise transformation software comprising instructions for performing the transformation, which transformation software is run on the processor unit 34a. The transformation software may be part of designing software of the design tool 32 for designing bases 10 to be provided with coding pattern 12. The designing software may then be arranged to trigger the transformation software upon finalizing the graphical information 14 such that the graphical information 14 output from the designing software is adapted for printing. As an alternative, the transformation software may be part of specific printing software for printing a coding pattern 12 with graphical information. Such printing software may be arranged to run on a computer connected to a printer and prepare a file that is suitable for printing. As a further alternative, the transformation software may be arranged to run on a printer and may then perform the transformation upon the printer receiving graphical information 14 to be combined with a coding pattern 12.

According to another embodiment, the transformation unit 34 may comprise a customer-specific integrated circuit adapted for the purpose (for example ASIC, application-specific integrated circuit) or some form of programmable integrated circuit (for example PROM, FPGA). The integrated circuit may have an input for receiving a representation of the graphical information and may be specifically adapted to perform the operations needed in the transformation. A working memory may be provided and be accessible to the integrated circuit. However, the integrated circuit may be arranged to receive a representation of the graphical information as input and provide the transformed representation of the graphical information as output. The integrated circuit may be arranged in a computer for designing the graphical information or for preparing a printable file. Alternatively, the integrated circuit may be arranged in or connected directly to the printer.

The representation of the graphical information 14 may be provided in the CMYK colour space. The transformation will thus firstly need to set the K component value to zero over the entire representation. Further, the CMY component values need to be transformed.

According to one embodiment, only one of the CMY component values is transformed such that it never exceeds the mixing threshold value. In this regard, the component value is mapped onto a range of values that are below the mixing threshold value. This may be achieved by, for instance, applying the following equation to the C component value:

$$C' = C * th \tag{1},$$

where C' is the transformed C component value, C is the C component value before transformation, and th is the mixing threshold value. The C component value before transformation may vary between 0 and 1, whereas the transformed C component value C' may vary between 0 and th.

The mixing threshold value may depend with the printer on which the graphical information 14 is to be printed. If the transformation is performed in the printer, this mixing threshold value may be known and used. However, if the transformation is performed in a computer for designing the graphical information, it may not even be known which type of printer that will be used for printing the graphical information 14. Then, a default value may be used which may be chosen with a margin such that the transformed component value should not exceed the mixing threshold value regardless what type of printer is used. For instance, such a default value may be set to 0.5.

Even if the mixing threshold value is known, the transformation may only map the transformed component value C' onto a range between 0 and a fraction of th, using e.g. an equation of the form C'=C*0.75*th. This implies that there is a margin between the range of values of the transformed component value C' and the mixing threshold value and decreases the likelihood of the black ink being used in printing the graphical information 14.

However, when only one component value is transformed, only one colour of the graphical information 14 is affected. This may affect the appearance of the graphical information 14 in that the entire graphical information 14 gets a yellowish hue.

According to another embodiment, all of the CMY component values are transformed.
All the CMY component values may be transformed according to Equation (1) above, whereby the relative colours of the graphical information 14 may be maintained. However, the graphical information 14 will have a brighter appearance.

According to a further embodiment, the Y component value is transformed according to the following equation:

$$Y'=Y*th/2 \tag{2},$$

where Y' is the transformed Y component value, Y is the Y component value before transformation, and th is the mixing threshold value. The Y component value before transformation may vary between 0 and 1, whereas the transformed Y component value Y' may vary between 0 and th/2. This implies that the graphical information 14 will have a bluish hue when printed. This facilitates reproduction of greyscale information on the base 10, and avoids that the printer tries to mix black ink into greyish picture elements. A similar transformation may also or alternatively be applied to the M component value, which will also provide a bluish hue of the printed graphical information 14, but to a lesser extent than the transformed Y component value.

The representation of the graphical information 14 may alternatively be provided in the RGB colour space. For example, in the GDI printer language, the RGB colour space is used for representing colours. If the transformation software may not be place in a GDI printer acting on the representation after it has been transformed into CMYK colour space, the transformation software needs to operate on the representation of the graphical information 14 in RGB colour space in order to ensure that the K component value will be set to zero when the RGB representation is converted to CMYK representation.

In this regard, it is realized that the conversion mainly applies the following formulae for obtaining the CMY component values:

$$C=1-R;$$

$$M=1-G;$$

$$Y=1-B;$$

where C, M and Y are the CMY component values, and R, G, and B are the RGB component values. Both the RGB and the CMY component values may vary between 0 and 1. Should the smallest value of the CMY component values in a picture element exceed the mixing threshold value, the K component will be used.

According to one embodiment, only one of the RGB component values is transformed such that the value of its CMY component counterpart never exceeds the mixing threshold value. In this regard, the RGB component value is mapped onto a range of values that will bring the corresponding CMY component value to be below the mixing threshold value. This may be achieved by, for instance, applying the following equation to the R component value:

$$R'=(1-th)*R+th \tag{3},$$

where R' is the transformed R component value, R is the R component value before transformation, and th is the mixing threshold value. The R component value before transformation may vary between 0 and 1, whereas the transformed R component value R' may vary between th and 1. Thereby, the C component value after conversion of the representation of the graphical information 14 from RGB colour space to the CMYK colour space will vary between 0 and (1-th). The Equation 3 requires that the threshold mixing value is larger than 0.5, since the C component values in the CMYK representation of the graphical information 14 may otherwise comprise values exceeding the mixing threshold value.

According to another embodiment, all of the RGB component values are transformed. All the RGB component values may be transformed according to Equation (3) above, whereby the relative colours of the graphical information 14 may be maintained. However, the graphical information 14 will have a brighter appearance.

According to a further embodiment, the RGB component values are transformed according to the following equations:

$$R'=(1-th)*R+th \qquad\qquad (4),$$

$$G'=(1-th)*G+th \qquad\qquad (5),$$

$$B'=(1-th/2)*B+th/2 \qquad\qquad (6),$$

where R', G', B' are the transformed RGB component values, R, G, B are the RGB component values before transformation, and th is the mixing threshold value. In this transformation, the blue component value B of the RGB representation is affected to a greater extent than the other component values. In the RGB representation, a grey colour is represented by a large B component value. Thus, by decreasing the B component value to a greater extent than the other component values, the grey colours become brighter. This may prevent the printer from introducing black ink in printing grey colours, a process called grey component replacement.

It should be noted that a vast number of other equations than the presented Equations 1-6 may be used. However, the equations should have the characteristic that it maps at least one of the CMY component values onto a range that is outside the domain where a printer would mix in the black ink in order to print the graphical information 14. The presented Equations 1-6 are linear, i.e. the range of allowed values is equally compressed over the entire range, whereby the relative difference between colours in the graphical information 14 is essentially maintained. However, use of non-linear equations may also be contemplated. Such non-linear equations may be used essentially to preserve image characteristics, such as luminance, that may be important to the user.

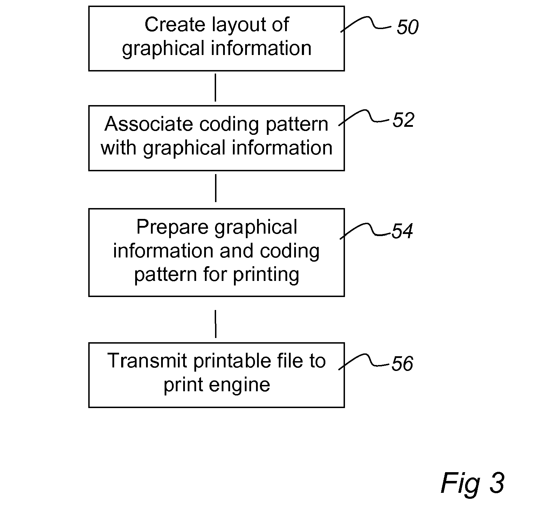

Referring now to Fig. 3, a method for printing graphical information 14 in combination with a coding pattern 12 onto a base 10 will be described. In a first step 50, the layout of the graphical information 14 to be printed is designed. This may be performed by a designer using a computer running special-purpose design software for creating layouts.

In a second step 52, the graphical information 14 is associated with a representation of coding pattern 12 to be printed. The rules for management of decoded information in the coding pattern 12 may also be set and transmitted either to a reading device, such as an electronic pen 20, which is arranged to read and decode the coding pattern 12 or to an external unit, which may receive images of the coding pattern 12 or the decoded information from the electronic pen 20. The actual graphical appearance of the coding pattern 12 need not be set in this step, but the information to be coded by the coding pattern 12 may instead be provided in the representation of the coding pattern 12. The second step 52 may be performed by a programmer for associating the coding pattern 12 with functions. The second step 52 may be performed using a computer running special-purpose software for creating rules for management of decoded information. Alternatively, the first step 50 and the second step 52 may be performed simultaneously or in the opposite order using the same software.

In a third step 54, the graphical information 14 and the coding pattern 12 are prepared to be printed onto a base 10. The representation of the graphical information 14 and the representation of the associated coding pattern 12 may be transmitted to a print software program for preparing a printable file. This print software program may be a part of the special-purpose software used in the second step 52, and may be triggered by a user choosing a Print command. Alternatively, the print software program may be stand-alone software which runs on a computer that is connected to one or more printers. As a further alternative, the print software program may be running on a processor unit of a printer and may prepare the printable file after the processor unit of the printer receives the representation of the graphical information 14 and the representation of the associated coding pattern 12.

The graphical information 14 may be represented as vector graphics elements and may need to be transformed to a set of picture element values in order to allow printing. The graphical information 14 may also be defined in e.g. the CMYK colour space or the RGB colour space. The print software program transforms the representation of the graphical information 14 for mapping the component values of each element onto a range of values, which will prevent use of the black ink by the printer, according to any one of the equations above. The print software program may provide a CMYK representation or an RGB representation of the graphical information 14 depending on the language to be used in communication with the printer. For instance, if GDI printer language is to be used, an RGB representation of the graphical information 14 is used. Thus, the print software program may also be arranged to convert the representation of the graphical information 14 to the appropriate colour space. The print software program may also be arranged to calculate the graphical appearance of the coding pattern 12 to be printed.

If the print software program is arranged in a printer, the mixing threshold value of the printer may be known to the print software program and be used in the Equations above. Alternatively, a printer to be used may be selected by a user in a user interface of the print software program. The print software program may then communicate with the printer in order to determine the mixing threshold value. This may be determined by the printer responding to a request from the print software program to provide the mixing threshold value. Alternatively, the print software program determines the make and type of the printer and may then determine the mixing threshold value by looking it up in a pre-stored table of the print software program. As a further alternative, the print software program prepares a printable file, which may be transmitted at a later stage to any printer. Thus, the print software program does not know what kind of printer will be used to print the graphical information 14. The print software program may then use a default value of the mixing threshold value in the Equations above.

In a fourth step 56, the printable file is transmitted to a print engine of a printer for outputting a hardcopy of the graphical information 14 and the coding pattern 12 on a base 10.

The coding pattern 12 may alternatively be printed in a separate step onto the base 10.

Thus, bases 10 with coding pattern 12 may be printed centrally and distributed to several users. The bases 10 may then be introduced into a tray of the printer to be used, such that the graphical information 14 is printed onto a base 10 which is already provided with a coding pattern 12. Similarly, the coding pattern 12 may be printed onto a base 10 which is already provided with graphical information 14.

The invention has mainly been described above with reference to a few embodiments.

However, as is readily appreciated by a person skilled in the art, other embodiments than the ones disclosed above are equally possible within the scope and spirit of the invention, which is defined and limited only by the appended patent claims.

**Claims**

1. A method for controlling printing of graphical information in combination with a coding pattern, wherein the graphical information and the coding pattern are to be printed with separate inks, the coding pattern being printed using a black ink corresponding to a K component of a CMYK colour space and the graphical information being printed using colour inks corresponding to CMY components of the CMYK colour space, said method comprising:

   receiving a representation of the graphical information comprising a set of elements making up the graphical information, each element comprising several component values together representing the colour of the element; and

   transforming the representation of the graphical information, said transformation mapping the component values of each element onto a range of values which is outside a domain where said black ink will be mixed by a printer into said colour inks during printing of the graphical information.

2. The method according to claim 1, wherein the printer is arranged to mix black ink into said colour inks when the minimum amount of the CMY components exceeds a mixing threshold value, and said transformation maps at least one of the component values of each element onto a range of values such that said mixing threshold value is not exceeded.

3. The method according to claim 1 or 2, wherein said representation of the graphical information is in RGB colour space.

4. The method according to claim 3, wherein said transformation maps the R and G component values of the RGB colour space onto a range of values such that the corresponding C and M component values of the CMYK colour space never exceed said mixing threshold value.

5. The method according to claim 3 or 4, wherein said transformation uses the following equations:

$$R'=(1-th)*R+th$$

$$G'=(1-th)*G+th$$

$$B'=(1-th/2)*B+th/2,$$

where R, G and B are the component values of the received representation of the graphical information, th is the mixing threshold value of the printer, and R', G' and B' are the transformed component values.

**6.** A computer program product, directly loadable into the internal memory of a processor in a computer unit, comprising software instructions that, when executed in said processor, perform the method according to any one of claims 1-5.

**7.** A device for controlling printing of graphical information in combination with a coding pattern, wherein the graphical information and the coding pattern are to be printed with separate inks, the coding pattern being printed using a black ink corresponding to a K component of a CMYK colour space and the graphical information being printed using colour inks corresponding to CMY components of the CMYK colour space,
wherein the device is arranged to receive a representation of the graphical information comprising a set of elements making up the graphical information, each element comprising several component values together representing the colour of the element; and
wherein the device comprises a transformation unit, which is arranged to transform the representation of the graphical information, said transformation mapping the component values of each element onto a range of values which is outside a domain where said black ink will be mixed by a printer into said colour inks during printing of the graphical information.

**8.** The device according to claim 7, wherein the device is implemented as an Application-Specific Integrated Circuit (ASIC).

**9.** The device according to claim 7, wherein the transformation unit comprises a processor unit, which is arranged to run a software program providing instructions to cause the processor unit to perform said transformation.

**10.** The device according to any one of claims 7-9, wherein the device is integrated in said printer.

*Fig 1*

*30*

Design Tool — *32*

↓ Graphical information

Transformation unit — *34*

| Processor unit | Working memory |

*34a*

*34b* — Working memory

↓ Transformed graphical information

Print engine — *36*

*Fig 2*

```
┌─────────────────────────┐
│     Create layout of    │   ⟋⟍ 50
│   graphical information  │
└─────────────────────────┘
            │
┌─────────────────────────┐
│  Associate coding pattern│  ⟋⟍ 52
│  with graphical information│
└─────────────────────────┘
            │
┌─────────────────────────┐
│     Prepare graphical    │   ⟋⟍ 54
│   information and coding  │
│     pattern for printing │
└─────────────────────────┘
            │
┌─────────────────────────┐
│  Transmit printable file to│ ⟋⟍ 56
│        print engine      │
└─────────────────────────┘
```

*Fig 3*

Europäisches
Patentamt

European
Patent Office

Office européen
des brevets

# EUROPEAN SEARCH REPORT

**Application Number**

EP 08 15 9264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/025201 A (HEWLETT PACKARD DEVELOPMENT CO [US]; ENCRENAZ MICHEL [ES]; LAMMENS JOH) 17 March 2005 (2005-03-17) * page 50, line 9 - page 53, line 21; figures 10,11 * | 1,6,7 | INV. G06K15/02 H04N1/60 |
| A | WO 02/082366 A (ANOTO AB [SE]; WIEBE LINUS [SE]; ERICSON PETTER [SE]) 17 October 2002 (2002-10-17) * page 17, line 1 - line 25; figure 5 * | 1,6,7 | |
| D,A | WO 01/48591 A (ANOTO AB [SE]; ERICSON PETTER [SE]) 5 July 2001 (2001-07-05) * page 16, line 25 - page 18, line 28 * | 1,6,7 | |

**TECHNICAL FIELDS SEARCHED (IPC)**

G06K
H04N
G06F

The present search report has been drawn up for all claims

| Place of search | Date of completion of the search | Examiner |
|---|---|---|
| The Hague | 16 December 2008 | Gélébart, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                 EP 08 15 9264

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2008

| Patent document cited in search report | | Publication date | Patent family member(s) | | Publication date |
|---|---|---|---|---|---|
| WO 2005025201 | A | 17-03-2005 | GB | 2420898 A | 07-06-2006 |
| | | | US | 2007273917 A1 | 29-11-2007 |
| WO 02082366 | A | 17-10-2002 | AT | 386991 T | 15-03-2008 |
| | | | CN | 1505801 A | 16-06-2004 |
| | | | EP | 1380008 A1 | 14-01-2004 |
| | | | JP | 2004528644 T | 16-09-2004 |
| | | | SE | 519012 C2 | 23-12-2002 |
| | | | SE | 0101208 A | 06-10-2002 |
| WO 0148591 | A | 05-07-2001 | AU | 2567801 A | 09-07-2001 |
| | | | AU | 2567901 A | 09-07-2001 |
| | | | AU | 2569301 A | 09-07-2001 |
| | | | BR | 0016610 A | 03-09-2002 |
| | | | CA | 2394922 A1 | 05-07-2001 |
| | | | EP | 1244996 A1 | 02-10-2002 |
| | | | EP | 1244955 A1 | 02-10-2002 |
| | | | EP | 1259933 A2 | 27-11-2002 |
| | | | JP | 2003518688 T | 10-06-2003 |
| | | | JP | 2003518698 T | 10-06-2003 |
| | | | JP | 2003519423 T | 17-06-2003 |
| | | | MX | PA02006340 A | 13-12-2002 |
| | | | WO | 0148678 A1 | 05-07-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5221833 A
- US 5477012 A
- WO 0073983 A
- WO 0126032 A
- WO 0171643 A
- US 6330976 B
- WO 0148591 A